# EUROPÄISCHE PATENTSCHRIFT

(11) **EP 2 476 033 B1**
(45) Veröffentlichungstag und Bekanntmachung des Hinweises auf die Patenterteilung: **19.06.2019**
(21) Anmeldenummer: 10770973.5
(22) Anmeldetag: 07.09.2010
(51) Int. Cl.: G05B 23/02

(54) **MODELLBASIERTES VERFAHREN ZUR ZUSTANDSÜBERWACHUNG VON ROTORBLÄTTERN**
MODEL-BASED METHOD FOR MONITORING THE CONDITION OF ROTOR BLADES
PROCÉDÉ BASÉ SUR UN MODÈLE POUR LA SURVEILLANCE DE L'ÉTAT DE PALES DE ROTORS

(30) Priorität: 08.09.2009 EP 09011485
(43) Veröffentlichungstag der Anmeldung: 18.07.2012
(73) Patentinhaber: Fraunhofer-Gesellschaft zur Förderung der angewandten Forschung e.V., 80686 München (DE); Wölfel Engineering GmbH & Co. KG., 97204 Höchberg (DE)
(72) Erfinder: FRANKENSTEIN, Bernd, 01454 Radeberg (DE); SCHUBERT, Frank, 01279 Dresden (DE); SCHUBERT, Lars, 01279 Schönteichen OT Petershain (DE); SCHULZE, Eberhard, 01896 Pulsnitz (DE); FRIEDMANN, Herbert, 97974 Würzburg (DE); HENKEL, Fritz-Otto, 97204 Höchberg (DE); EBERT, Carsten, 04289 Leipzig (DE)
(74) Vertreter: Pfenning, Meinig & Partner mbB
(86) Internationale Anmeldenummer: PCT/DE2010/001087
(87) Internationale Veröffentlichungsnummer: WO 2011/029439

(56) Entgegenhaltungen:
- DE-U1- 20 021 970
- DE-U1- 20 021 970
- HAMEED Z ET AL: "Condition monitoring and fault detection of wind turbines and related algorithms: A review", RENEWABLE AND SUSTAINABLE ENERGY REVIEWS, ELSEVIERS SCIENCE, NEW YORK, NY, US, Bd. 13, Nr. 1, 1. Januar 2009 (2009-01-01) , Seiten 1-39, XP025496619, ISSN: 1364-0321, DOI: DOI:10.1016/J.RSER.2007.05.008 [gefunden am 2008-10-04]
- L. Zhang et al.: "An Overview of Operational Modal Analysis", Aalborg Universitet , 2005, Retrieved from the Internet: URL:http://vbn.aau.dk/files/12812136/An_Ov erview_of_Operational_Modal_Analysis [retrieved on 2005-06-14]
- R. Brincker et al.: "Understanding Stochastic Subspace Identification", Aalborg Universitet , 2006, Retrieved from the Internet: URL:http://vbn.aau.dk/files/9172771/Unders tanding_Stochastic_Subspace_Identification [retrieved on 2016-06-14]
- G.Chr. Larsen et al.: "Modal Analysis of wind turbine blades", , 1 February 2002 (2002-02-01), Retrieved from the Internet: URL:http://orbit.dtu.dk/files/7712483/ris_ r_1181.pdf [retrieved on 2017-01-30]
- H.B. Pedersen et al.: "Applied Modal Analysis of WindTurbine Blades", , 1 February 2003 (2003-02-01), Retrieved from the Internet: URL:http://orbit.dtu.dk/fedora/objects/orb it:88210/datastreams/file_7711587/content [retrieved on 2017-01-30]
- "Real-Time Dynamic Measurements of a Wind Turbine Rotor Blade Using ModalFiltering", , 12 February 2009 (2009-02-12), Retrieved from the Internet: URL:https://sem.org/wp-content/uploads/201 5/12/sem.org-IMAC-XXVII-Conf-s11p004-Real- time-Dynamic-Measurements-Wind-Turbine-Rot or-Blade-Using-Modal.pdf [retrieved on 2017-01-30]
- L.M. Khoo et al.: "Structural Damage Assessment Using Vibration Modal Analysis", Structural Health Monitoring, vol. 3, no. 2 June 2004 (2004-06), pages 177-194, Retrieved from the Internet: URL:http://journals.sagepub.com/doi/pdf/10 .1177/1475921704042680 [retrieved on 2017-01-30]

## Beschreibung

Die Erfindung betrifft ein Verfahren zur Zustandsüberwachung von Rotorblättern für Windkraftanlagen. Die Rotorblätter gehören zu den am stärksten belasteten Teilen von Windkraftanlagen. Sie sind neben den aus der Eigenmasse und der Rotation herrührenden Belastungen und dem Wind auch weiteren äußeren Einflüssen, wie z.B. Frost und hohen Temperaturen aber auch Blitzeinschlägen, ausgesetzt. Sie werden üblicherweise aus Verbundwerkstoffen hergestellt und es bedarf daher einer Überwachung ihres Zustandes, die häufig noch manuell in periodischen Zeitabständen mit entsprechend hohem Aufwand durchgeführt werden muss.

Es sind auch andere Techniken für die Zustandsüberwachung bekannt.

So wird in DE 100 65 314 B4 eine Überwachung beschrieben, bei der Eigenfrequenzspektren detektiert werden, die dann mit Referenzspektren verglichen werden, die für bestimmte Zustände und Fehler an Rotorblättern repräsentativ und bekannt sind. Dies daraus bekannte Prinzip wird in modifizierter Form auch in WO02/053910 A1 und WO 2006/012827 A1 beschrieben, wobei in jedem Fall Eigenfrequenzspektren genutzt werden sollen.

Dies begrenzt aber die Möglichkeiten der Zustandsüberwachung dahingehend, dass für bestimmte aufgetretene Zustände oder Fehler an Rotorblättern keine Referenzspektren zur Verfügung stehen und somit kein Vergleich möglich ist. Das Verfahren ist Erfahrungsbasiert. Außerdem ist die Auswertung sehr aufwändig, da die erfassten Frequenzspektren häufig nicht identisch mit einem vorhandenen Referenzspektrum sind, so dass abgewägt werden muss, ob der jeweilige Zustand der jeweiligen Referenz zuzuordnen ist oder nicht.

Außerdem ist eine Lokalisierung von Fehlern oder Defekten an einem Rotorblatt nur möglich, wenn für genau diesen Fehler oder Defekt ein Referenzspektrum bekannt ist. Es liegt dabei auf der Hand, dass dies insbesondere bei den häufig an den verschiedensten Positionen an Rotorblättern vorkommenden Rissbildungen und Delaminationen, die auch noch unterschiedlichste geometrische Abmaße aufweisen können, nicht möglich ist.

DE 200 21 970 U1 betrifft ebenfalls eine Einrichtung zur Überwachung des Zustandes von Rotorblättern an Windkraftanlagen. Dabei soll die Überwachung mit an und/oder in den Rotorblättern befindlichen Aktoren und Sensoren durchgeführt werden. In DE 200 21 970 U1 wird außerdem bei der Würdigung des Standes der Technik auch auf "Operational Modal Analysis" verwiesen. Im Gegensatz dazu soll in der durch DE 200 21 970 U1 offenbarten Erfindung ein Modell basierend auf finiten Elementen zum Einsatz kommen.

Die Druckschriften G. Chr. Larsen et al.: "Modal Analysis of wind turbine blades", 1 Februar 2002, sowie L. M. Khoo et al.: "Structural Damage Assessment Using Vibration Modal Analysis", Structural Health Monitoring Bd. 3, Nr. 2, Seiten 177-194, Juni 2004 zeigen ebenfalls Analysemethoden für Schwingungen bzw. Wellen.

Z. Hameed et al. beschreiben in "Condition monitoring and default detection of wind turbines and related algorithms: A review"; RENEWABLE AND SUSTANABLE ENERGY REVIEWS; ELESEVERE SCIENCE, NEW YORK, NY, US, Bd. 13, Nr. 1, 01. Januar 2009, Seiten 1-39, XP025496619, IS'NN: 1364-0321, DOI: DOI:10.1016/J.RSER.2007.05.008 Möglichkeiten zur Durchführung einer Schwingungsanalyse.

Es ist daher Aufgabe der Erfindung die Genauigkeit der Zustandsüberwachung an Rotorblättern von Windkraftanlagen zu erhöhen und eine Lokalisation von Fehlern oder Defekten und ihre genaue Beschreibung zu ermöglichen.

Erfindungsgemäß wird diese Aufgabe mit einem Verfahren, das die Merkmale des Anspruch 1 anwendet, gelöst. Vorteilhafte Ausgestaltungen und Weiterbildungen der Erfindung können mit in untergeordneten Ansprüchen bezeichneten Merkmalen realisiert werden.

Bei dem erfindungsgemäßen modellbasierten Verfahren werden mit einem an einem Rotorblatt angebrachten Sensor- und Aktornetzwerk oder mit einer Netzwerkanordnung von Ultraschallwandlern global am Rotorblatt auftretende Rotorblatteigenschwingungen und lokale geführte elastische Wellen permanent zeit- und ortsaufgelöst detektiert. Zusätzlich werden periodisch in vorgebbaren Zeitabständen geführte elastische Wellen, die von jeweils einem Aktor oder Ultraschallwandler emittiert und von Sensoren oder Ultraschallwandlern detektiert und dabei auf Veränderungen der emittierten Wellen untersucht.

Zur Bestimmung der Übertragungsfunktion von Aktoren oder Ultraschallwandlern werden in definierter Form geführte elastische Wellen emittiert. Dabei wird eine akustische Signaturanalyse mit einem oder mehreren Sensor(en) oder Ultraschallwandler(n) durchgeführt.

Bei der permanenten Detektion für die globale Zustandsüberwachung in Folge von Strukturschäden eines Rotorblattes ist es vorteilhaft, für die emittierten elastischen Wellen in einem vorgebbaren Frequenzbereich die Signalankunftszeiten und/oder die Amplituden zu erfassen. Dabei kann die Schallenergie und/oder das Verhältnis Schallamplitude zu Schallenergie erfasst werden.

Für geführte elastische Wellen, die mit Sensoren oder Ultraschallwandlern erfasst worden sind, kann auf die jeweilige Position eines Sensors oder Ultraschallwandlers bezogen, eine Häufigkeitsverteilung detektierter Schallereignisse bestimmt werden.

Aus den Messsignalen für die Schwingungsgeschwindigkeiten, Schwingungsbeschleunigungen und/oder lokalen Dehnungen kann das Übertragungsverhalten der Rotorblattstruktur modelliert und dann Strukturschäden durch einen Vergleich zwischen einem momentan identifizierten Modell mit einem davor identifizierten Modell an Hand von schadenssensitiven Modellparametern bestimmt werden.

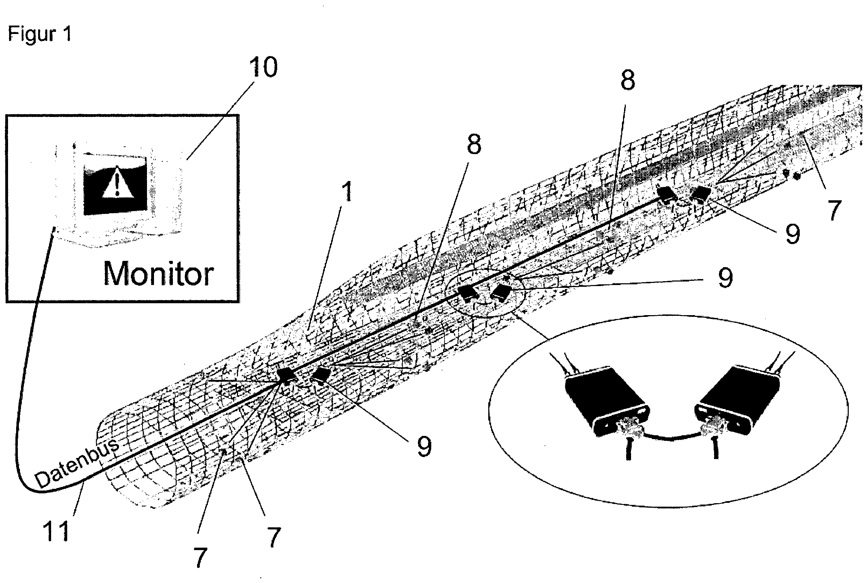

Die Erfindung fußt auf einem an einem Rotorblatt angebrachten Sensor- bzw. Ultraschallwandlernetzwerk entsprechend Figur 1 bestehend aus Sensoren bzw. Ultraschallwandlern und Netzwerkknoten zur Signalerfassung von geführten elastischen Wellen im Ultraschallbereich und von modalen Schwingungen im niederfrequenten Bereich. Es können Schwinggeschwindigkeiten, Schwingbeschleunigungen und lokalen Dehnungen zur Beschreibung von Blatteigenschwingungen bestimmt und genutzt sowie durch die Netzwerkknoten Signale vorverarbeitet und kommuniziert werden.

Eine geeignete Anordnung von Sensoren oder Ultraschallwandlern für die Detektion geführter elastischer Wellen im Ultraschallbereich ist in Figur 2 gezeigt. Für eine Beschreibung von Rotorblatteigenschwingungen ist dies in Figur 12 gezeigt. Erfindungsgemäß kann das Rotorblatt mit Hilfe der Finite-Elemente-Methode auf der Grundlage von Konstruktionsunterlagen des Blattherstellers (Geometrie, Materialdaten, Randbedingungen, Lasten) modelliert werden. Weiterhin können statische und dynamische Simulationen zur Berechnung von Dehnungen, Verformungen, Spannungen, Eigenfrequenzen und Eigenformen für Festlegung der optimalen Sensor- bzw. Ultraschallwandlerpositionen durchgeführt werden. (Fig. 16)

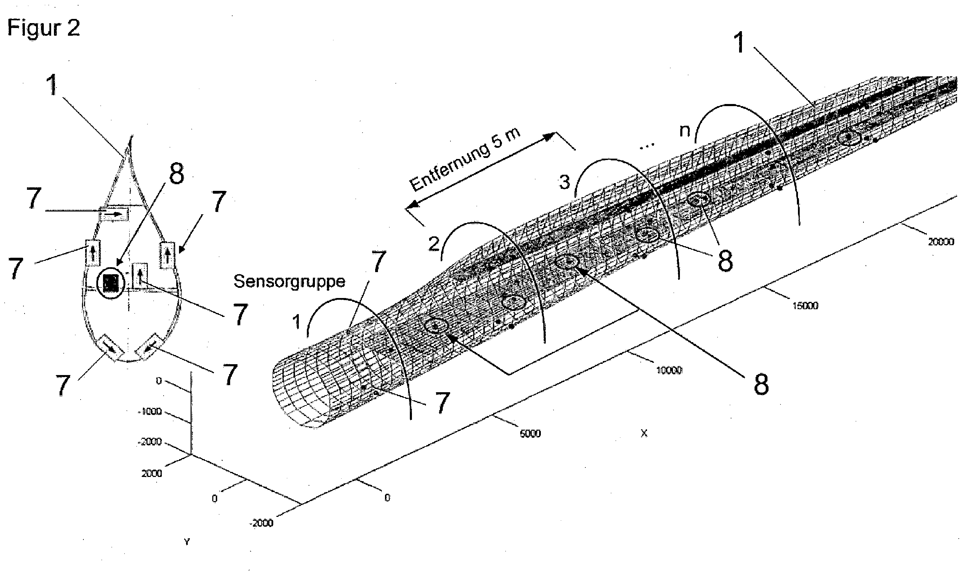

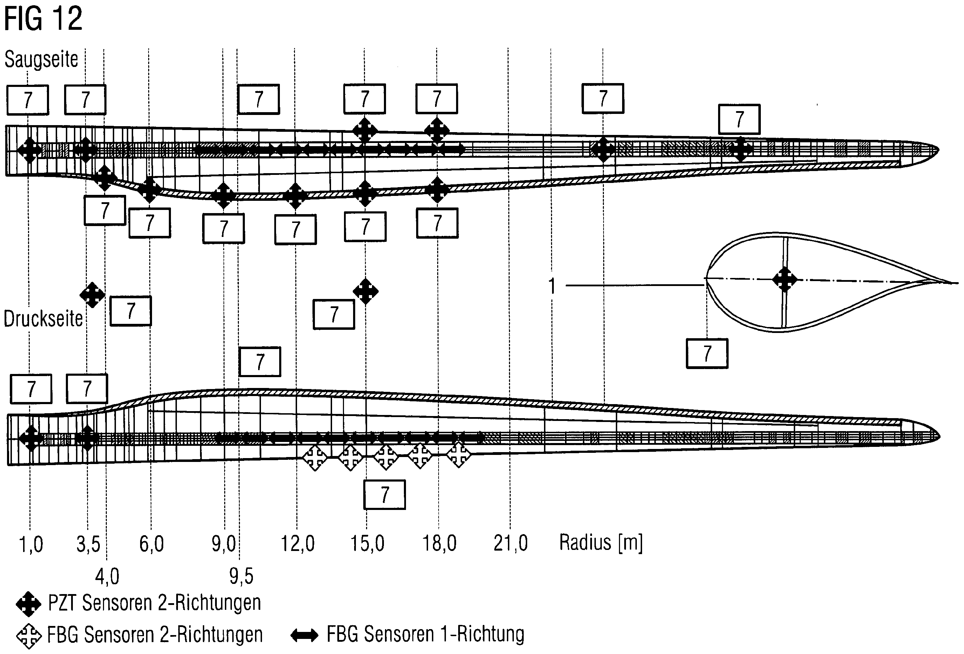

Entsprechend der vorausgegangenen Simulationen kann die Sensoranordnung über das ganze Rotorblatt verteilt jedoch mit Schwerpunktbildung an den durch die FEM-Festigkeitsberechnung ausgewiesenen am höchsten beanspruchten kritischen Bereichen, in denen die Sensoren oder Ultraschallwandler mit höherer Dichte und kleineren Abständen zueinander angeordnet sein sollen, festgelegt werden; entsprechend Fig. 2 für die Erfassung geführter elastischer Wellen im Ultraschallbereich und gemäß Fig. 12 zur Beschreibung von Rotorblatteigenschwingungen.

Bei der Erfindung wird so vorgegangen, dass eine globale und eine lokale Überwachung durchgeführt werden. Für die globale Überwachung können mit an einem Rotorblatt angebrachten Sensoren oder Ultraschallwandlern niederfrequente Schwingungen im Frequenzbereich 0,1 Hz < f < 500 Hz in Form von Schwingungsgeschwindigkeiten, Schwingungsgbeschleunigungen und lokalen Dehnungen zeit- und ortsaufgelöst permanent oder in definierten Zeitintervallen detektiert werden. Darauf aufbauend kann eine zyklische Modellierung der Übertragungsfunktion des Rotorblattes in Form eines mit Hilfe der Stochastic Subspace Identification erstellten Zustandsraummodells durchgeführt werden (vgl. dazu R. Brincker; P. Andersen; "Understanding Stochastic Subspace Identification"; Proceedings oft he 24th International Modal Analysis Conference(IMAC); St. Louis; Missouri; 2006).

Das erste auf Messdaten beruhende Zustandsraummodell und das auf der Grundlage von Konstruktionsdaten erstellte FEM-Modell des Rotorblattes erhalten jeweils den Status eines Referenzmodells.

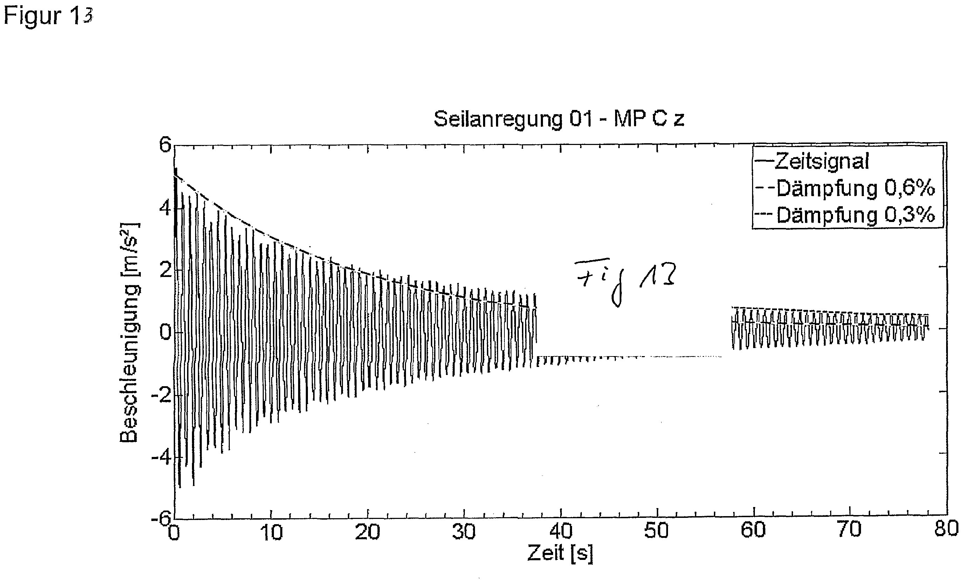

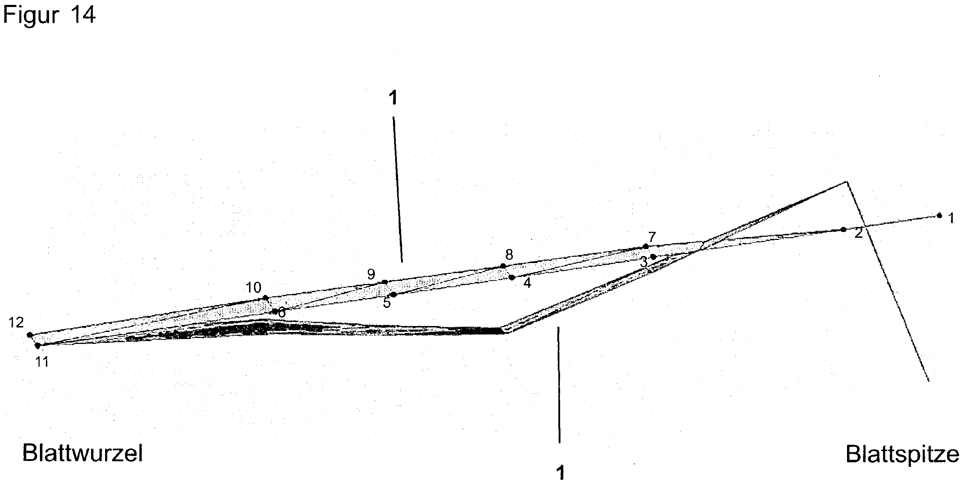

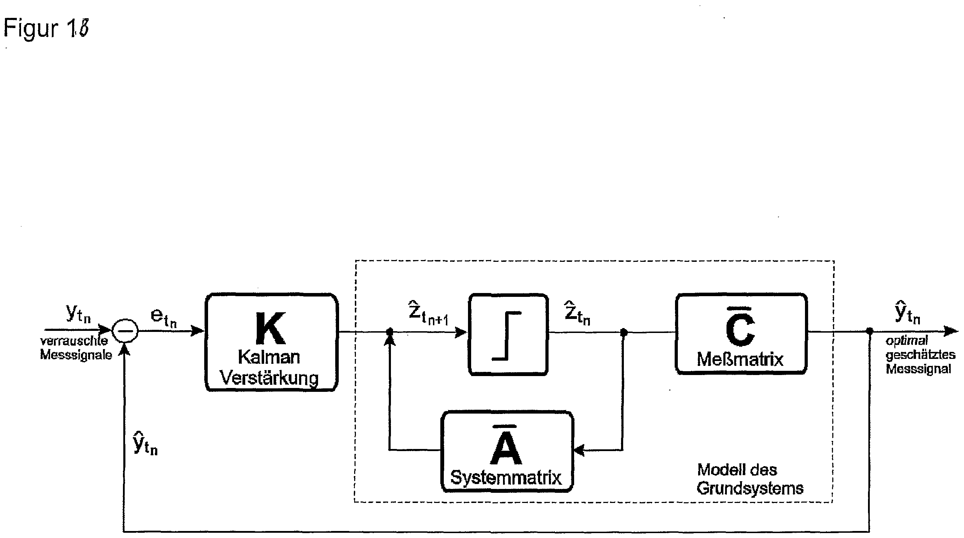

Mit Hilfe der Operational Modal Analysis (OMA) können aus den identifizierten (Zustandsraum-)Modellen ortsaufgelöst modale Parameter (Eigenfrequenzen, Eigenformen, s. Fig. 14, modale Dämpfungen, s. Fig. 13) extrahiert und mit den zugehörigen ortsaufgelösten simulierten Parametern des FEM-Modells (Eigenfrequenzen, Eigenformen oder modale Dämpfungen) verglichen werden (s. Fig. 18, Funktionsweise eines Zustandsraummodells bei Output-Only bzw. operational modal analysis, OMA). Bei den Messdaten können insbesondere Veränderungen der Amplituden, die Veränderungen der Dämpfung anzeigen können, und Verschiebungen von Eigenfrequenzen, die auf Veränderungen der Steifigkeit des Rotorblattes oder eine Veränderung der Masse, z.B. durch Eisansatz, hindeuten können, berücksichtigt werden. Durch Vergleich von veränderten Messsignalen in Bezug zu Messsignalen oder Simulationsmodellen (FEM-Simulation) eines ungeschädigten Rotorblattes oder der Ausgangsstruktur eines Rotorblattes können Veränderungen bzw. Schädigungen eines Rotorblatts erkannt werden. Dabei kann durch von einem Schadensereignis emittierte geführte elastische Wellen, die von mindestens drei Sensoren oder Ultraschallwandlern detektiert werden, eine Lokalisierung des jeweiligen Schadens erreicht und die Positionskoordinaten des Schadens in das Simulationsmodell eingebaut und dabei berücksichtigt werden.

Im Rückgriff auf die FEM Simulation zur Positionierung von Sensoren oder Ultraschallwandlern kann zur Identifikation der schadensanfälligen Rotorblattbereiche eine Beurteilung der Dehnungen, Verformungen und mechanischen Spannungen durchgeführt und durch weitere schadensrelevante Parameter, wie Dämpfung und Eigenfrequenzen und -formen ergänzt werden. Messdaten der schadensrelevanten Parameter können ständig mit den Referenzmodellen der ungeschädigten Ausgangsstruktur des jeweiligen Rotorblattes abgeglichen werden. Um so bei Abweichungen der Messdaten von den Referenzmodellen Hinweise auf die Position und Art einer ggf. aufgetretenen Strukturschädigung erhalten zu können (model update). Solange Messdaten und Simulationsdaten übereinstimmen, ist nicht von einem Strukturschaden am Rotorblatt auszugehen. Kommt es jedoch zu Abweichungen, wird in den vorher durch Simulation gefundenen Bereichen mit hoher Schadenswahrscheinlichkeit die Steifigkeit des FEM-Modells so lange verändert (verkleinert, abgemindert), bis die simulierten Daten wieder mit den in Folge eines aufgetretenen Schadens/Defekts geänderten Messdaten aus dem/den Netzwerk(en) übereinstimmen. Ein Ergebnis eines solchen model-updates ist ein in seiner Steifigkeit verändertes Simulationsmodell, dessen globales Verhalten dem des entsprechend geschädigten Rotorblatts entspricht. Gestützt wird das model-update durch Messdaten aus der Schallemession, die Hinweise zur Lokalisierung/Lokalisation der Schadensentwicklung liefert.

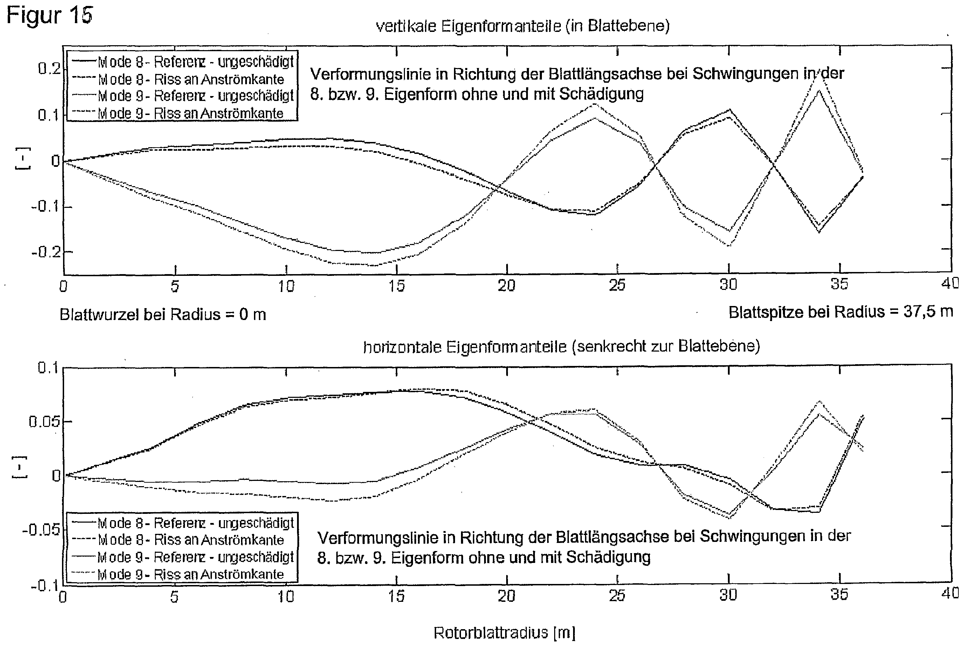

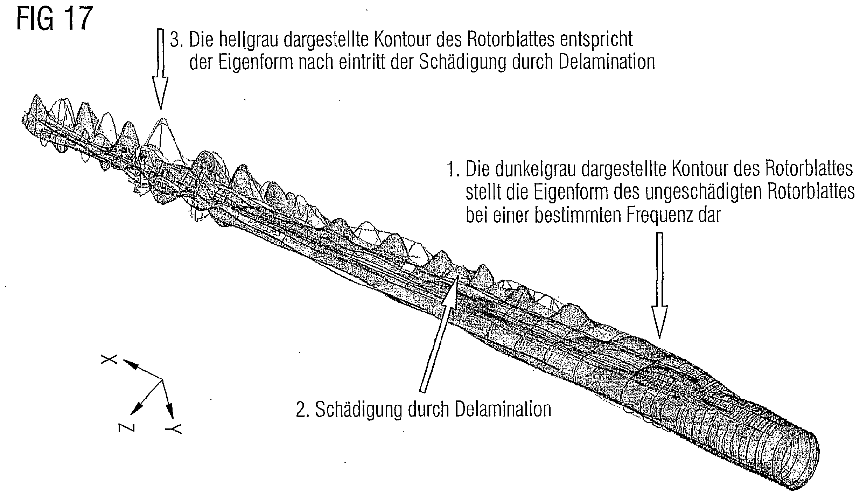

Ortsaufgelöste schadensrelevante Messdaten aus Schallemission und akustischer Signaturanalyse, mit deren Hilfe die Veränderungen bzw. Schäden nach Art und Größe beschreibbar sind, können zur Berechnung der Resttragfähigkeit in das Finite-Elemente-Modell (Referenzmodell) eingebaut werden. Eine erneute statische und dynamische numerische Simulation mit diesem Modell des geschädigten Rotorblattes (s. Fig. 15, 17) soll ähnlichen Veränderungen von Eigenfrequenzen und Eigenformen liefern, wie die messtechnisch ermittelten Unterschiede zwischen Referenzmodell und aktuellem Modell (Zustandsraummodell) und so einen Beitrag zur aktuellen Beurteilung des Rotorblattes liefern können. Es kann auch eine Entscheidung zur Außerbetriebnahme der jeweiligen Windkraftanlage getroffen werden, wenn ein vorgegebene Richtwerte überschreitender Schaden/Defekt erkannt worden ist.

Nach Berücksichtigung einer erfassten an einem Rotorblatt aufgetretenen Strukturschädigung im jeweiligen Finite Elemente Modell, kann die zu diesem Zeitpunkt vorhandene Beanspruchung und/oder die Resttragfähigkeit bestimmt werden.

Für die lokale Überwachung können zwei Verfahren eingesetzt werden:
Dies ist einmal die Schallemissionsprüfung, acoustic emission (AE), im Frequenzbereich von 5 kHz bis 50 kHz und zum anderen die akustische Signaturanalyse (acousto ultrasonics AU), im Frequenzbereich 5 kHz bis 150 kHz.

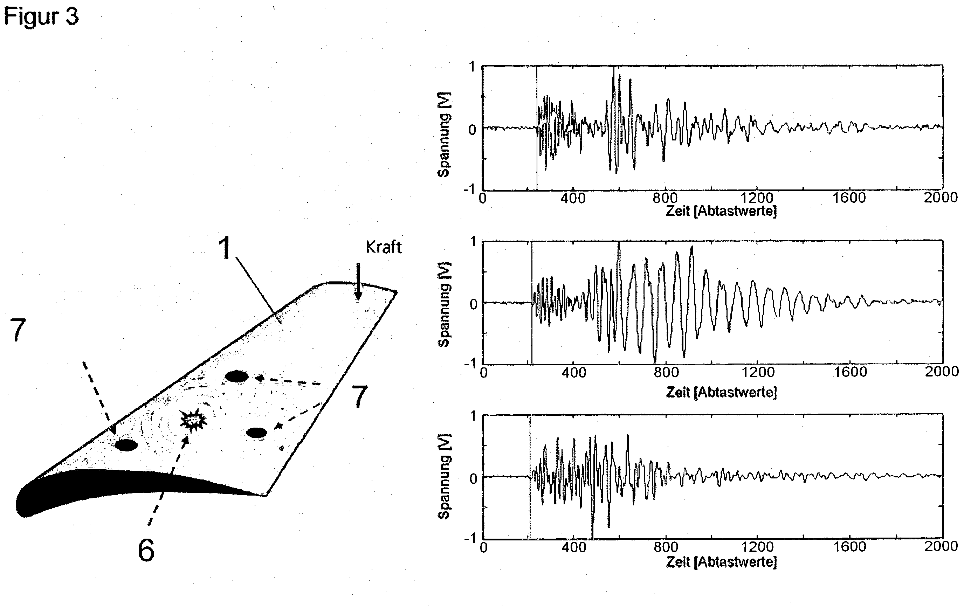

Bei der Schallemissionsprüfung (AE) werden an Rotorblättern permanent Messsignale von geführten elastischen Wellen zeitaufgelöst erfasst und zu Zwecken der Triangulation in Gruppen von mindestens drei zusammengefassten Sensoren oder Ultraschallwandlern (Überwachungscluster) entsprechend Figur 3 aufgenommen. Die Erfassung erfolgt getriggert, das heißt durch einen Vergleich von Langzeit- (Zeitkonstante zwischen 10 und 100 ms) und Kurzzeiteffektivwert (Zeitkonstante zwischen 0,1 und 1 ms) wird die Entscheidung zur Erfassung eines Zeitabschnitts/Zeitintervalls gefällt. Die Länge dieses Zeitabschnitts/Zeitintervalls entspricht der Messsignallaufzeit zwischen den in einem Überwachungscluster zusammengefassten Sensoren oder Ultraschallwandlern, die mindestens einem Netzwerkknoten zugeordnet sein können.

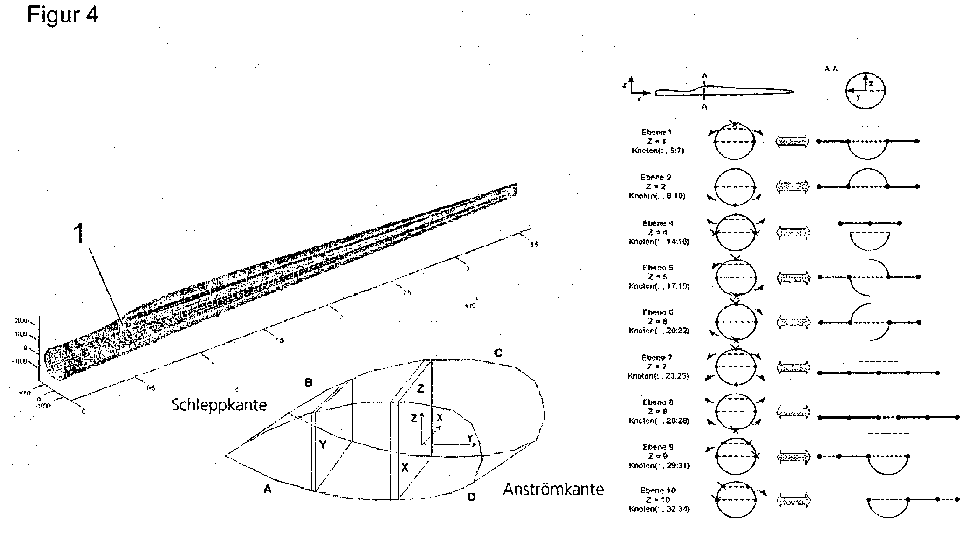

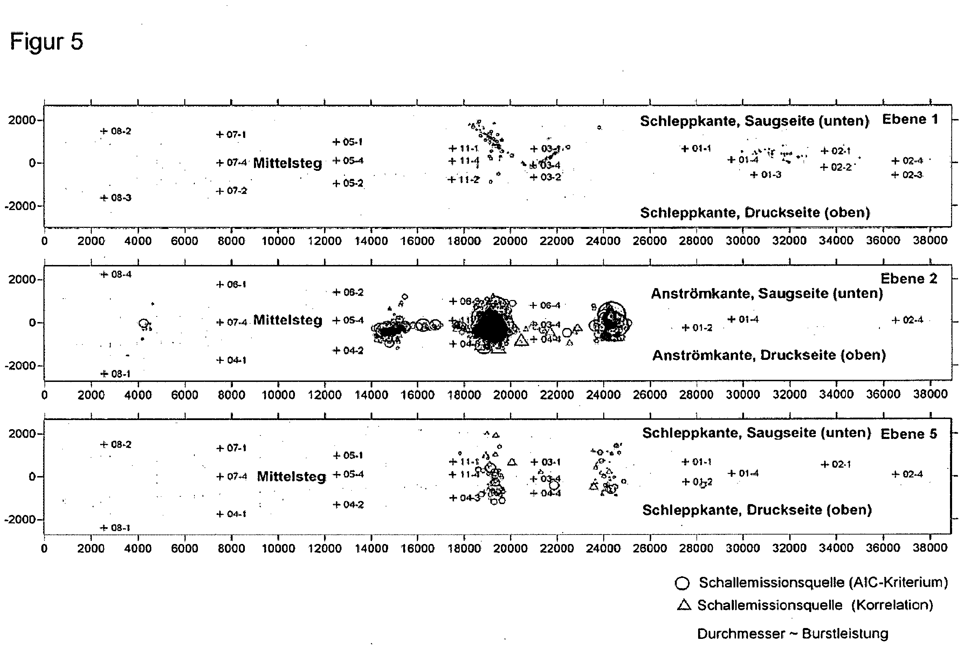

Über mehrere Ersteinsatzbestimmungsalgorithmen zur Erkennung des Messsignalbeginns werden die Laufzeitunterschiede der geführten elastischen Wellen zwischen den Sensoren oder Ultraschallwandlern und dem Quellort (Position der Emission) unter Berücksichtigung der möglichen Schallausbreitungsebenen berechnet (Fig. 4 und 5).

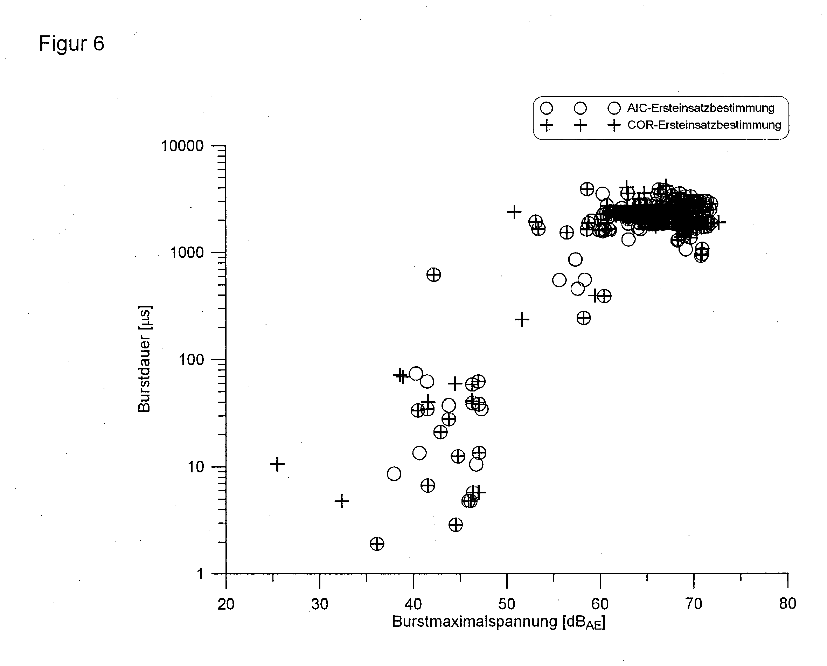

Die detektierten Schallemissionssignale können statistisch bewertet werden, um daraus den Schädigungszustand des Rotorblattes beschreiben zu können. Dies ist beispielhaft in Figur 6 dargestellt.

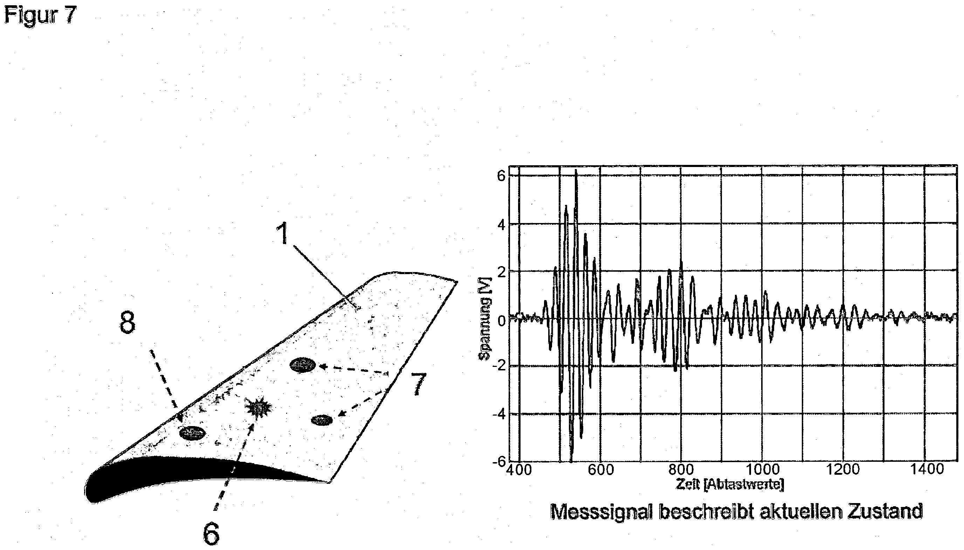

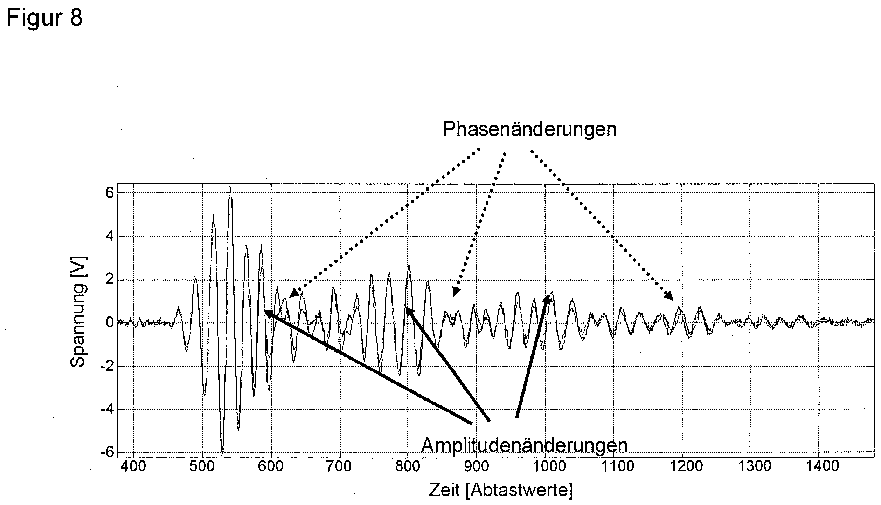

Erfindungsgemäß werden bei der akustischen Signaturanalyse am jeweiligen Rotorblatt in vorgebbaren Zeitabständen elastische Wellen in das Material eingebracht und von den umgebenden Sensoren oder Ultraschallwandlern zeitaufgelöst erfasst (Figur 7). Im Schadensfall wechselwirken die elastischen Wellen mit Strukturschäden im/am Rotorblatt. Dies wirkt sich auf die Signalformen derart aus, dass zeitaufgelöst Amplituden und Phasenänderungen auftreten. Dies ist beispielhaft in Figur 8 dargestellt.

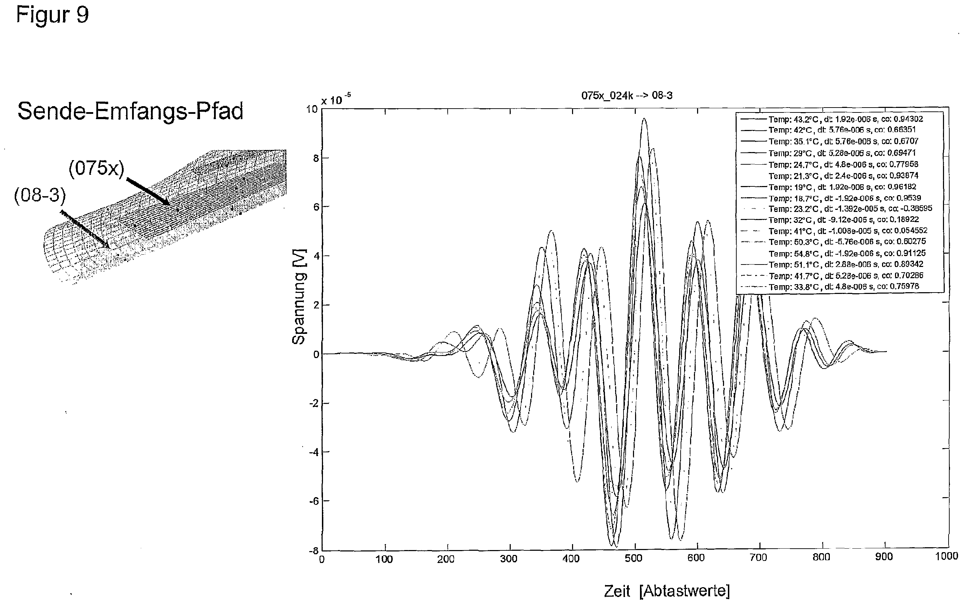

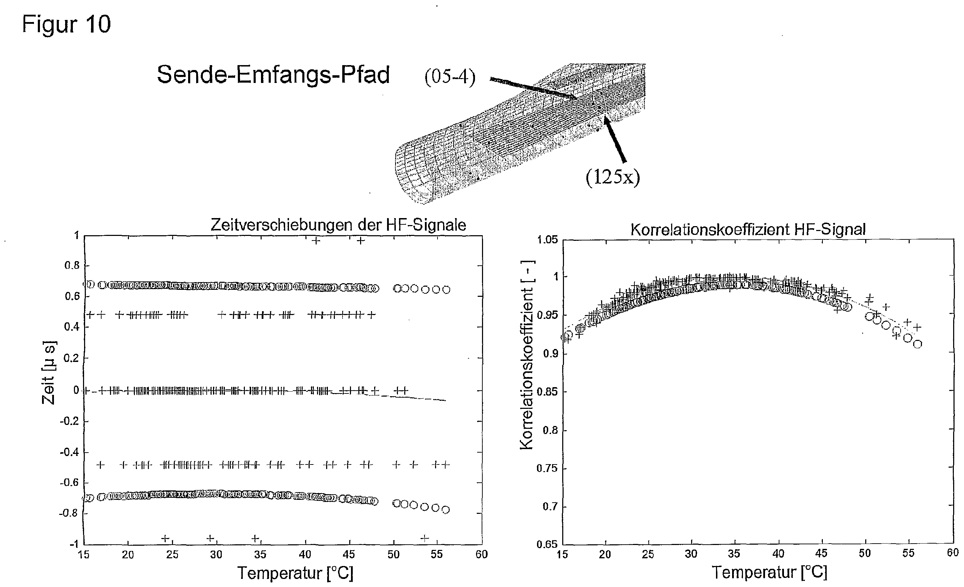

Dabei sollte der Einfluss wechselnder Umgebungsbedingungen vom Schadenseinfluss getrennt berücksichtigt werden. Bei der Erfindung kann dafür ein Verfahren zur Kompensation wechselnder Umgebungsbedingungen eingesetzt werden, das Korrelationen zwischen Umwelteinflüssen und Eigenschaften der elastischen Wellen über längere Beobachtungszeiträume nutzt. Figur 9 zeigt am Beispiel die Umwelteinflüsse auf die Messsignale. Wie Figur 10 belegt, können erst nach einer Korrektur der Temperatureinflüsse Änderungen des Schadensindikators Materialfehlern oder anderen Strukturschäden zugeordnet werden. Mit dem Korrekturverfahren kann darüber hinaus eine statistische Bewertung des Schadensindikators in Abhängigkeit der Umwelteinflüsse getroffen werden.

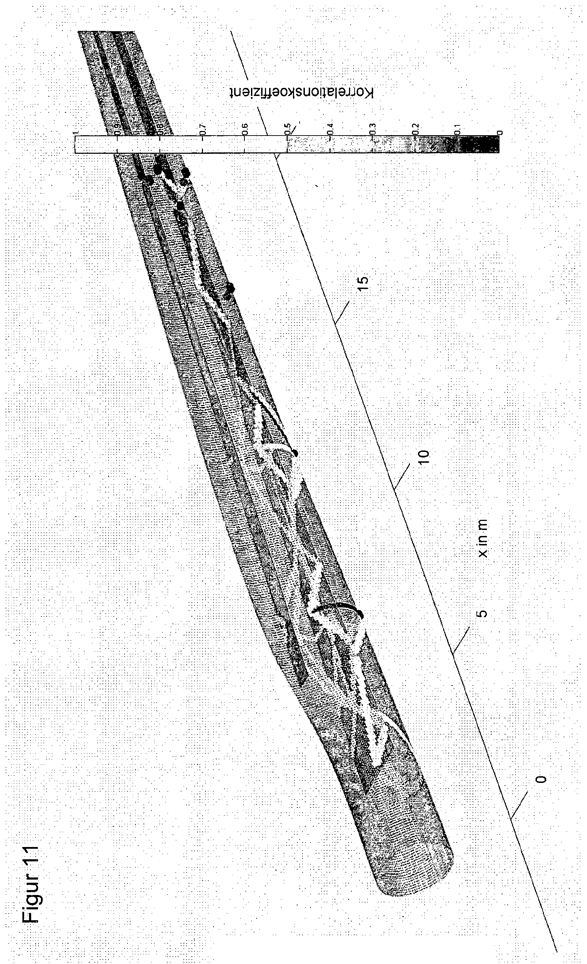

Ortsaufgelöste Schadensindikationen können im einfachsten Fall durch einen Bezug auf Signalpfade zwischen Anregungs-/Emissions- und Empfangs-/Detektionsposition elastischer Wellen realisiert werden. Figur 11 zeigt dies beispielhaft für den Korrelationskoeffizienten als Schadensindikator. Eine Präzisierung der jeweiligen Schadensart und des Schadensortes (Schadensposition) kann durch iterative Vorwärtsmodellierungen erreicht werden.

Nachfolgend soll die Erfindung beispielhaft näher erläutert werden.

Die Figur 1 zeigt ein Beispiel für die Konfiguration eines auf einem Rotorblatt 1 angebrachten Netzwerks mit Sensoren 7, Ultraschallwandlern 2, Aktoren 8 und Netzwerkknoten 9 für eine Emission, Signalerfassung und -übertagung von geführten elastischen Wellen im Bereich des Ultraschalls. Die erfassten Messsignale werden über eine Datenbusleitung 11 einer elektronischen Auswerteeinheit 10 zugeführt.

Ein Beispiel für eine geeignete Anordnung von Aktoren 8 und Sensoren 7 auf Strukturelementen eines Rotorblatts 1 zur lokalen Überwachung mit Akustischer Signaturanalyse (Acousts Ultrasonics - AU) und Schallemissionsprüfung (Acoustic Emission- AE). Beide Verfahren nutzen geführte elastische Wellen im Ultraschallbereich zur Detektion von Strukturschäden. Dabei sind einmal eine perspektivische und eine Schnittdarstellung gezeigt. Bei der perspektivischen Darstellung kann man die Anordnung mehrerer Sensoren 7 zu Sensorgruppen erkennen. Mit den Aktoren 8 können Ultraschallwellen emittiert und mit den Sensoren 7 detektiert werden. An der Schnittdarstellung kann man erkennen, dass Aktoren 8 im Inneren eines Rotorblatts an Strukturelementen zur Versteifung des Rotorblatts angebracht sein können. Sensoren 7 können ebenfalls an Strukturelementen und an der äußeren Wand des Rotorblatts 1 angebracht sein.

Die Figur 3 verdeutlicht das Messprinzip der Schallemissionsprüfung (AE) an Rotorblättern 1. Bei Überschreiten von lokalen Festigkeitseigenschaften kommt es z.B. bei einer Rissbildung oder einem Risswachstum zur Freisetzung elastisch gespeicherter Energie. Dies erfolgt auch bei Reibung und Strukturveränderung. Dabei kann Wärme in Schallenergie umgewandelt werden. Jedes Material leitet die Schallwellen mit einer materialspezifischen Geschwindigkeit weiter. Die Dämpfung dieser akustischen Wellen ist ebenfalls materialspezifisch und wird außerdem von Umweltfaktoren, wie Feuchtigkeit oder bei heterogenen Materialien, wie GFK-Laminaten auch von den einzelnen Komponenten, wie Epoxidharz und Faserlamelle, beeinflusst. Die sich ausbreitenden Schallwellen können mit akustischen Sensoren 7 detektiert werden. Aus den Laufzeitdifferenzen zwischen den detektierten Messsignalen, die von einzelnen schallemittierenden Quellen (aktive Risse, Verbundstörungen, Reibung als mögliche Strukturschädigung 6) ausgehen, zu einer Vielzahl von Sensoren 7, kann auf die Position der jeweiligen der Strukturschädigung 6 als Quelle zurück gerechnet werden. Dies ist mit den drei Diagrammen, die die Messsignalverläufe der drei in diesem Beispiel eingesetzten Sensoren 7 über die Zeit darstellen, verdeutlicht.

Mit Figur 4 soll verdeutlicht werden, wie Strukturschäden 6 in den verschiedenen Strukturelementen eines Rotorblatts 1 lokalisiert werden können. Dazu können sämtliche Ausbreitungswege von Schallwellen über den Querschnitt eines Rotorblatts 1 erfasst und in einen Lokalisierungsalgorithmus eingepflegt werden. Beim gezeigten Beispiel sind dies neun Ausbreitungsebenen. Plausibilitätsbetrachtungen können die Schallereignisse den Ausbreitungsebenen zu ordnen. Damit wird das Problem der räumlichen Lokalisierung im Rotorblatt 1 auf eine zweidimensionale Lokalisierung in den Strukturelementen des Rotorblattes 1 zurückgeführt. Im Ergebnis dieser planaren Ortung der Schallemissionsereignisse können die in den Ausbreitungsebenen bestimmten Positionen der Schallemissionsquellen in ein Raumkoordinatensystem rücktransformiert werden.

Das Ergebnis einer solchen planaren Zuordnung von Schallemissionen ist beispielhaft für einen Zeitraum von vier Stunden und für drei Ausbreitungsebenen in der Figur 5 gezeigt. Die Signaturen der Schallemissionsquellen unterscheiden sich nach der Art der eingesetzten Algorithmen zur Ersteinasatzbestimmung der Bursts. Dabei versteht man unter Ersteinsatz den Zeitpunkt in einem Signal wo der Schallemissions-Burst mittels eines geeigneten Algorithmus (statischer Kennwert, Akaike-Kriterium AIC, Korrelation) im Umgebungsrauschsignal detektiert werden kann. Die Größe der einzelnen Signaturen wurde proportional zur Burstleistung gewählt.

Aus Figur 6 kann ein Beispiel für eine Klassifizierung von Schallemissionsereignissen entnommen werden. Schallemissionsergebnisse, die innerhalb einer Stunde auftreten unterscheiden sich untereinander deutlich in ihrer Amplitude (Burstmaximalspannung) und der Länge des transienten Signals (Burstdauer). Nach statischen Versuchen an GFK-Laminaten lassen sich derartige Schallemissionsparameter zur Abschätzung der Quellmechanismen der akustischen Emissionen verwenden. Analog zu Figur 5 unterscheiden sich die Signaturen der Schallemissionsereignisse nach der Art der eingesetzten Ersteinsatzbestimmung der Schallemissionsereignisse (Bursts - AIC, Korrelation).

Das Messprinzip der akustischen Signaturanalyse (Acousto Ultrasonics - AU) kann mit Figur 7 verdeutlicht werden. Bei diesem Verfahren werden am jeweiligen Rotorblatt 1 in vorgebbaren Zeitabständen elastische Wellen in das Material hinein emittiert und von in der Nähe angebrachten Sensoren 7 oder Ultraschallwandlern 2 zeitaufgelöst detektiert. Die detektierten Messsignale sind in ihren Eigenschaften von den aktuellen Materialeigenschaften bestimmt. Ändern sich die Materialeigenschaften, z.B. als Folge von Rissbildung oder lokalen Steifigkeitsänderungen, dann verändern sich auch die Zeitverläufe der Messsignale. Das In Figur 8 gezeigte Diagramm zeigt beispielhaft Phasen- und Amplitudenveränderungen, die in Folge veränderter Materialparameter im Emissions-Detektionspfad der akustischen Signaturanalyse auftreten. Die in unterschiedlichen Messsignalfenstern auftretenden Amplituden-Phasenänderungen können zur Schadensanalyse heran gezogen werden. Ein Vergleich der bei unterschiedlichen Materialzuständen aufgezeichneten Messsignale zeigt Änderungen im betreffenden Messsignalpfad auf, die mit Strukturschäden 6 korreliert werden können.

Das in Figur 8 gezeigte Diagramm zeigt beispielhaft Phasen- und Amplitudenänderungen, die in Folge veränderter Materialparameter im Emissions-Detektionspfad der akustischen Signaturanalyse auftreten. Die in unterschiedlichen Messsignalfenstern auftretenden Amplituden- und Phasenänderungen können zur Schadensanalyse herangezogen werden.

Ein sich verändernder Temperatureinfluss auf die transienten Messsignale für einen Emissions-Detektionspfad ist beispielsweise mit den in Figur 9 gezeigten Messsignalverläufen, die bei verschiedenen Temperaturen detektiert worden sind, veranschaulicht. In der Legende sind die für jedes Messsignal berechneten Laufzeitdifferenzen dt und der Korrelationskoeffizient co, bezogen auf das den Ausgangszustand charakterisierende Messsignal bei einer Temperatur von 20 °C, dargestellt. Bei der Messsignalverarbeitung der akustischen Signaturanalyse können solche unterschiedlichen Umwelteinflüsse berücksichtigt und eleminiert werden.

Im links angeordneten Teil von Figur 10 sind die nach einer Laufzeitkorrektur verbleibenden Messsignalverschiebungen, die auf ± 1 Abtastwert eingeschränkt werden konnten und rechts davon ist der entsprechende Schadensindikator als gekreuzte Striche und das zugehörige 95 % Vertrauensintervall als Kreis dargestellt.

Mit Figur 11 sollen beispielhaft an einem Rotorblatt erkannte kritische Bereiche, die dunkler dargestellt und insbesondere an der Anströmkante angeordnet sind, gezeigt werden. Diese wurden durch definiertes Einbringen von geführten Wellen in das Rotorblattmaterial und Signaturanalyse erfasst. Es sind in der Darstellung ausgewählte Emissions-Detektions-Pfade mit unterschiedlichen Graustufen dargestellt, die dem Wert des jeweils ermittelten Schadensindikators (Korrelationskoeffizient der Ausgangsmessung entspricht. Ein kleinerer Korrelationskoeffizient (dunkler) weist auf geschädigte Bereich am Rotorblatt 1 hin.

In Figur 12 sind in mehreren Ansichten und einer Schnittdarstellung die Anordnung von Sensoren 7 zur Erfassung von Eigenschwingungen für ein Beispiel eines zu überwachenden Rotorblatts 1 gezeigt. Die Anordnung der Sensoren 7 hängt von der Konstruktion des Rotorblatts 1 ab und ist daher je nach Typ des jeweiligen Rotorblatts 1 unterschiedlich. Dabei sollte ein Sensornetzwerk, bei dem Sensoren 7 möglichst über das ganze oder zumindest große Bereiche verteilt angeordnet sind, eingesetzt werden. Mit den Sensoren 7 dieses Sensornetzwerks können Dehnungen, auch Dehnungen in Folge von geführten elastischen Wellen, Beschleunigungen, Frequenzen, Amplituden und die Dämpfung von Schwingungen erfasst werden.

Diese Überwachung sollte an der Saug- und auch der Druckseite sowie für innenliegend angeordnete Tragstrukturen durch geführt werden. Mit einem solchen Sensornetzwerk können Veränderungen an der Tragstruktur von Rotorblättern (Gurte, Stege) und an der aerodynamischen Außenhülle erkannt werden. Bei einem Sensornetzwerk können unterschiedliche Sensoren 7 so angebracht werden, dass sie in bestimmten Achsrichtungen besonders sensitiv sind.

Die Figur 13 veranschaulicht die Strukturdämpfung des Rotorblatts 1. Die Strukturdämpfung umfasst sowohl die durch die umgebende Luft hervorgerufene Dämpfung, wie auch die Materialdämpfung oder durch Reibung hervorgerufene Dämpfung. Stets wird dabei die Schwingungsenergie in eine andere Energieform umgewandelt und wenn keine neue Energie zugeführt wird, klingt die Schwingung ab, wie dies in der in Figur 13 dargestellten Abklingkurve erkennbar ist. Die Strukturdämpfung als Summe aller unterschiedlichen Formen der Dämpfung wird an einer sich im Betrieb drehenden Windenergieanlage mit der Operational Modal Analysis ermittelt.

In Figur 14 sind mit der Operational Modal Analysis ermittelte Eigenformen eines Rotorblatts 1 gezeigt. Die globale niederfrequente Komponente des Überwachungssystems beruht auf der messtechnischen Erfassung der modalen Parameter: Eigenfrequenzen, zugehörige Eigenformung und Dämpfung. Schädigungen des Rotorblatts 1, die seine Festigkeit reduzieren und/oder die Dämpfung, z.B. durch Reibung verändern, wirken sich auf die Strukturantwort, also auf die Reaktionsweise einer Struktur auf eine Anregung aus. Bei Versuchen im Labor wird die Strukturantwort durch experimentelle Modalanalyse (EMA) bestimmt. Dabei wird des Rotorblatt 1 definiert zu Schwingungen angeregt. Die zeitlich veränderliche darauf einwirkende Kraft und die daraus resultierende Strukturantwort werden gemessen und daraus die zugehörige Übertragungsfunktion bestimmt.

Da die Erregerkräfte bei einer Windenergieanlage nicht unmittelbar gemessen werden können, scheidet die experimentelle Modalanalyse zur Ermittlung der modalen Parameter aus. Sie kann aber durch die Operational Modal Analysis (OMA), bei der die Erregungsfunktion nicht bekannt sein muss, ersetzt werden. Die Schwingungserregung des Rotorblatts 1 kann durch Umweltrauschen, d.h. im Wesentlichen durch Wind und durch beliebige andere Erschütterungen, wie z.B. die Impulse beim Turmdurchgang erreicht werden. Für die Ermittlung der modalen Parameter - Eigenfrequenz und Dämpfung stehen die Stochastic Subspace Identification im Zeitbereich oder die Enhanced Frequency Domain Decomposition im Frequenzbereich zur Verfügung.

Jeder Eigenfrequenz des Rotorblatts 1 kann eine ganz bestimmte Schwingungsform, die zugehörige Eigenform, zugeordnet werden. Verändert sich die Steifigkeit eines Rotorblatts, z.B. durch eine Schädigung tragender Stege, ändert sich auch die Eigenform (vgl. auch Figur 15). Diese Eigenformen können simuliert oder mit einem Sensornetzwerk bestimmt werden. Figur 14 zeigt eine gemessene Eigenform eines Rotorblatts 1 bei einer Frequenz von 5,12 Hz. Mit einer speziellen Software werden dabei die Messsignale der einzelnen über das jeweilige Rotorblatt 1 verteilten Sensoren so miteinander verknüpft, dass sie die Schwingungen des Rotorblatts in der charakteristischen Eigenform wiedergeben. Da nur sehr wenige Messpunkte vorliegen, kann die Schwingungsform im Gegensatz zu einer simulierten Eigenform nur angenähert dargestellt werden. Dies reicht jedoch aus, um Rückschlüsse auf die Änderung der Festigkeit des Rotorblatts zu ziehen (vgl. zu OMA: L. Zhang, R. Brincker; P. Andersen, "An Overview of Operational Modal Analysis"; Major Develepment and Issues; Proceedings oft he 1st International Operational Modal Analysis Conference (IOMAC); Copenhagen; Denmark 2005;
zu Substance Iteration: R. Brincker, P. Andersen; "Understanding Stochastic Subspace Identification"; Proceedings oft he 24th International Modal Analysis Conference (IMAC); St. Louis; Missouri; 2006;
zu Frequency Domain Decomposition: R. Brincker; P. Andersen; N.J. Jacobson; "Automated Frequency Domain Decomposition for Operational Modal Analysis"; Proceedings of the 25th International Modal Analysis Conference (IMAC); Orlando; Florida; 2007).

In Figur 15 sind jeweils zwei in zwei Ebenen gemessene Eigenformen (Moden 8 und 9,) bei Anregung des Rotorblatts in Biege- bzw. Schlagrichtung (flapwise bzw. edgewise) vor und nach dem Auftrteten eines Risses an der Vorderkante (leading edge) des Rotorblatts 1. Mit Hilfe des Verfahrens der Operational Modal Analysis wurden nur Messsignale von Sensoren 7, die entlang des Steges eines Rotorblatts 1 angeordnet waren, ausgewertet. Dadurch entsteht eine 2D-Darstellung. Die Eigenform des ungeschädigten Rotorblatts 1 ist jeweils mittels durchgezogener und die des geschädigten Rotorblatts 1 mit gestrichelter Linie dargestellt. Diese Linien repräsentieren die Schwingungsform des Rotorblattes in Richtung seiner Längsachse.

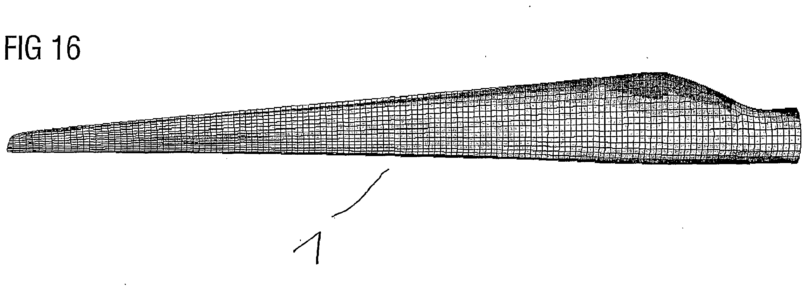

Die Figur 16 stellt ein Ergebnis einer FEM-Simulation dar. Mit derartigen Simulationen können z.B. Verformungen, Dehnungen, mechanische Spannungen, Eigenfrequenzen und Eigenformen berechnet werden. Im gezeigten Beispiel sind die mechanischen Spannungen dargestellt. Die Farb- oder Grauwertabstufung kann wie die Höhenstufe einer geografischen Karte genutzt werden. Dabei bedeuten z.B. dunkle Farben oder Grauwerte, Bereiche mit größeren mechanischen Spannungen. Durch die Nutzung der jeweiligen Graustufe kann eine ortsaufgelöste Bestimmung der mechanischen Spannungen erfolgen.

In Figur 17 sind Simulationsergebnisse eines ungeschädigten Rotorblattes 1 in hellerem Grau und eines geschädigten Zustandes in Dunkelgrau übereinander gelegt dargestellt. Durch eine Schädigung des Rotorblatts 1 - Delamination bzw. Deckschichtablösung bei Radius 20 m, der Schaden ist durch einen Pfeil gekennzeichnet - kommt es zu einer Veränderung der Steifigkeit der Struktur und damit zu Veränderungen der Eigenfrequenzen und Eigenformen. Diese Veränderung der Form ist ein deutlicher Hinweis auf eine Schädigung.

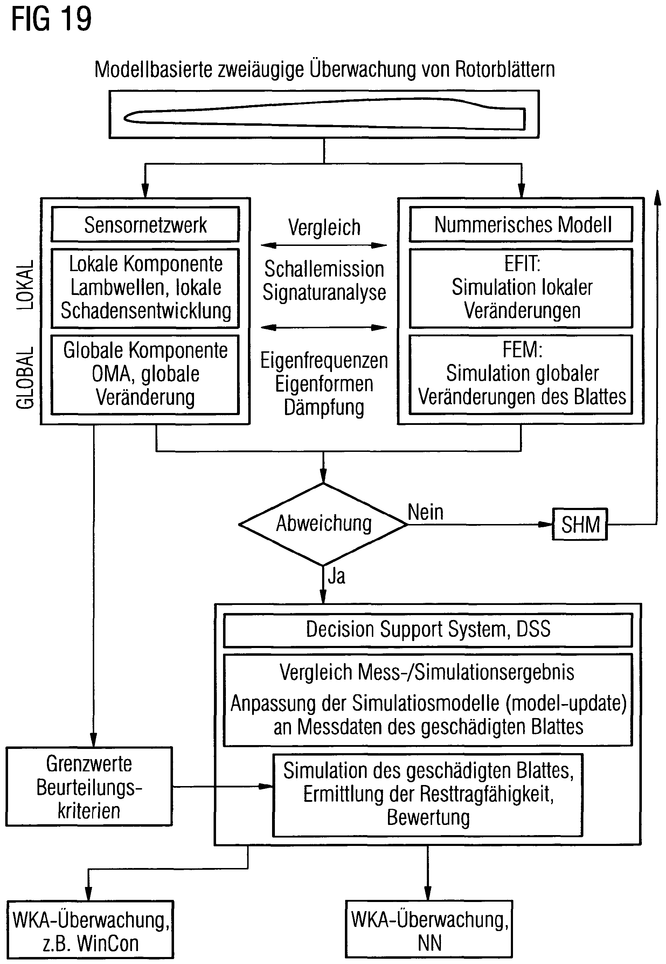

Ein Blockschaltbild eines Zustandsraummodells, wie es mit der Operational Modal Analysis identifiziert wird, ist in Figur 18 gezeigt. Die Dynamik des Systems (der Rotorblattstruktur) ist in den Zustandsraummatrizen A und C modelliert. Aus diesen Matrizen können durch eine Eigenwertzerlegung die modalen Parameter Eigenfrequenz, modale Dämpfung und Eigenform bestimmt werden. Um ein vollständiges Modell der Struktur zu erhalten, bei dem auch die Amplituden und die Phasenlage modelliert sind, wird numerisch die Matrix K (Kalman-Verstärkung) bestimmt. Es ergibt sich ein so genanntes Innovations-Zustandsraummodell, bei dem am Systemeingang die Innovation - als idealer weisser Rauschprozess - gebildet aus der Differenz der gemessenen und der vom Modell geschätzten Strukturantworten anliegen. Die Schadenserkennung und -lokalisierung kann dann durch den fortlaufenden Vergleich der numerischen Zustandsraummodelle zwischen Referenzzustand und aktuellem Zustand statt finden. In Figur 19 ist ein Flussdiagramm für die Durchführung des gesamten Verfahrens zur Überwachung dargestellt. Es beinhaltet eine messtechnische Komponenten, die in der linken Spaltenanordnung unterhalb des Sensornetzwerks dargestellt ist und eine Simulationskomponente, die in der rechten Spaltenanordnung unterhalb des Stichworts Numerisches Modell angeordnet ist. Sowohl die messtechnische Komponente, wie auch die Simulationsseite können das globale Verhalten des Rotorblatts und lokale Veränderungen abbilden. Verändern sich die Messsignale, muss geprüft werden, ob diese Abweichungen von einer Strukturänderung oder z.B. von Eisansatz verursacht worden sind. Dies geschieht durch den Abgleich der Messergebnisse aller am Rotorblatt durchgeführten Messungen und Simulationsergebnissen. Dabei können vorgebbare Schwellwerte berücksichtigt werden. Stellt sich heraus, dass die die veränderten Messsignale auf eine strukturelle Schädigung zurückgeführt werden können, kann mit Hilfe eines model update Verfahrens versucht werden, die Strukturschädigung in die Simulationsmodelle einzubauen. Mit einem Simulationsmodell, das die jeweilige Strukturschädigung berücksichtigt, können Aussagen über die verbleibende Tragfähigkeit bzw. Restlebensdauer eines Rotorblatts bzw. seiner Struktur gemacht werden.

## Patentansprüche

1. Modellbasiertes Verfahren zur Zustandsüberwachung von Rotorblättern für Windkraftanlagen, bei dem mit einem an einem Rotorblatt (1) angebrachten Sensor- und Aktornetzwerk oder mit einer Netzwerkanordnung von Ultraschallwandlern (2) global am Rotorblatt (1) auftretende Rotorblatteigenschwingungen und lokale geführte elastische Wellen permanent zeit- und ortsaufgelöst detektiert werden;
zusätzlich periodisch in vorgebbaren Zeitabständen geführte elastische Wellen, die von jeweils einem Aktor (8) oder Ultraschallwandler (2) emittiert werden, von Sensoren (7) oder Ultraschallwandlern (2) detektiert und auf Veränderungen der emittierten Wellen untersucht werden; wobei
zur Bestimmung der Übertragungsfunktion von Aktoren (8) oder Ultraschallwandlern (2) in definierter Form geführte elastische Wellen emittiert werden und dabei eine akustische Signaturanalyse mit einem oder mehreren Sensor(en) (7) oder Ultraschallwandler(n) (2) durchgeführt wird; wobei
ein auf Messdaten beruhendes Zustandsraummodell und ein auf Grundlage von Konstruktionsdaten erstelltes Finite-Elemente-Methoden-Modell des Rotorblatts erstellt werden und
ein Vergleich zwischen dem momentan identifizierten, auf Messdaten beruhendem Modell mit dem davor identifizierten, auf Grundlage von Konstruktionsdaten erstellten Modell an Hand von schadenssensitiven Modellparametern durchgeführt wird und
aus den Messsignalen für die Schwingungsgeschwindigkeiten,
Schwingungsbeschleunigungen und/oder lokalen Dehnungen das Übertragungsverhalten der Rotorblattstruktur in Zyklen modelliert wird und Strukturschäden (6) durch einen Vergleich zwischen dem momentan identifizierten Modell mit dem davor identifizierten Modell an Hand von schadenssensitiven Modellparametern bestimmt werden, wobei aus den identifizierten Modellen mittels Operational Modal Analysis (OMA) modale Parameter, nämlich Eigenfrequenzen, Eigenformen und/oder modale Dämpfungen, extrahiert und diese Parameter mit den zugehörigen simulierten Parametern verglichen werden.

2. Verfahren nach Anspruch 1, **dadurch gekennzeichnet, dass** die Laufzeiten der von einem oder mehreren Aktoren (8) oder Ultraschallwandlern (2) emittierten elastischen Wellen zu einem oder mehreren Sensor(en) (7) oder Ultraschallwandler(n) (2) bestimmt werden.

3. Verfahren nach einem der vorhergehenden Ansprüche, **dadurch gekennzeichnet, dass** eine Detektion emittierter geführter elastischer Wellen gleichzeitig mit mindestens drei Sensoren (7) oder Ultraschallwandlern (2) durchgeführt wird.

4. Verfahren nach einem der vorhergehenden Ansprüche, **dadurch gekennzeichnet, dass** bei der permanenten Detektion für die globale Zustandsüberwachung in Folge von Strukturschäden (6) eines Rotorblattes (1) emittierten elastischen Wellen in einem vorgebbaren Frequenzbereich die Signalankunftszeiten und/oder die Amplituden erfasst werden.

5. Verfahren nach Anspruch 4, **dadurch gekennzeichnet, dass** die Schallenergie und/oder das Verhältnis Schallamplitude zu Schallenergie erfasst wird/werden.

6. Verfahren nach einem der vorhergehenden Ansprüche, **dadurch gekennzeichnet, dass** für geführte elastische Wellen, die mit Sensoren (7) oder Ultraschallwandlern (2) erfasst worden sind, auf die jeweilige Position eines Sensors (7) oder Ultraschallwandlers (2) bezogen, eine Häufigkeitsverteilung detektierter Schallereignisse bestimmt wird.

7. Verfahren nach einem der vorhergehenden Ansprüche, **dadurch gekennzeichnet, dass** durch Vergleich von veränderten Messsignalen in Bezug zu Messsignalen oder Simulationsmodellen FEM-Simulation) eines ungeschädigten Rotorblattes (1) oder der Ausgangsstruktur eines Rotorblattes (1) Veränderungen oder Schädigungen eines Rotorblatts (1) erkannt werden.

8. Verfahren nach Anspruch 7, **dadurch gekennzeichnet, dass** durch von einem Schadensereignis emittierte geführte elastische Wellen, die von mindestens drei Sensoren (7) oder Ultraschallwandlern (2) detektiert werden, eine Lokalisierung des jeweiligen Schadens erfolgt und die Positionskoordinaten des Schadens in das Simulationsmodell eingebaut werden.

9. Verfahren nach einem der vorhergehenden Ansprüche, **dadurch gekennzeichnet, dass** nach Berücksichtigung einer erfassten an einem Rotorblatt (1) aufgetretenen Strukturschädigung (6) im jeweiligen Finite Elemente Modell, die zu diesem Zeitpunkt vorhandene Beanspruchung und/oder die Resttragfähigkeit bestimmt wird.

10. Verfahren nach einem der vorhergehenden Ansprüche, **dadurch gekennzeichnet, dass** mit Ultraschallwandlern (2)oder anderen Sensoren lokale Dehnungen am Rotorblatt bestimmt werden.

11. Verfahren nach einem der vorhergehenden Ansprüche, **dadurch gekennzeichnet, dass** mit Sensoren (7), Aktoren (8) oder Ultraschallwandlern (2) Netzwerke gebildet werden, bei denen in höher belasteten kritischen Rotorblattbereichen, die Abstände von benachbarten Sensoren (7) oder Ultraschallwandlern (2) kleiner sind, als in anderen Bereichen des Rotorblatts (1).

12. Verfahren nach einem der vorhergehenden Ansprüche, **dadurch gekennzeichnet, dass** die Ereignisse der modellbasierten Verfahren zur lokalen und globalen Zustandsüberwachung zu einem Bewertungsergebnis zusammengefasst werden.

## Claims

1. A model-based method for monitoring the condition of rotor blades for wind turbines, wherein eigenvibrations of the rotor blade occurring globally at the rotor blade (1) and locally guided elastic waves are permanently detected with time resolution and space resolution using a sensor and actuator network attached to a rotor blade (1) or using a network arrangement of ultrasound transducers (2);
in addition, elastic waves which are guided periodically at predefinable time intervals, which are respectively emitted by an actuator (8) or ultrasound transducer (2) and detected by sensors (7) or ultrasound transducers (2), and are inspected for variations of the emitted waves; wherein
for determining the transfer function of actuators (8) or ultrasound transducers (2) in a defined form, guided elastic waves are emitted and in doing so an acoustic signature analysis is carried out using one or more sensor(s) (7) or ultrasound transducer(s) (2); wherein
a state space model based on measurement data and a finite elements method model of the rotor blade based on design data are generated, and
a comparison between the instantaneously identified model based on measured data with the previously identified model which was created on the basis of design data is performed with reference to damage-sensitive model parameters and
the transfer behavior of the rotor blade structure is modeled in cycles from the measured signals for the vibration speeds, vibration accelerations and/or local elongations and structural damages (6) are determined by a comparison between the instantaneously identified model with the previously identified model with reference to damage-sensitive model parameters, wherein from the identified models by means of operational modal analysis (OMA) modal parameters, namely eigenfrequencies, eigenmodes and/or modal damping are extracted and these parameters are compared with the associated simulated parameters.

2. A method in accordance with claim 1, **characterized in that** the transit times of the elastic waves emitted by one or more actuators (8) or ultrasound transducers (2) to one or more sensors (7) or ultrasound transducers (2) are determined.

3. A method in accordance with one of the preceding claims, **characterized in that** a detection of emitted guided elastic waves is carried out simultaneously by at least three sensors (7) or ultrasound transducers (2).

4. A method in accordance with one of the preceding claims, **characterized in that** in the permanent detection for the global monitoring of the condition the signal arrival times and/or the amplitudes are detected in a predefinable frequency range as a consequence of elastic waves emitted due to structural damage (6) of a rotor blade (1).

5. A method in accordance with claim 4, **characterized in that** the acoustic energy and/or the ratio of acoustic amplitude to acoustic energy is/are detected.

6. A method in accordance with one of the preceding claims, **characterized in that** a frequency distribution of detected acoustic events, related to the respective position of a sensor (7) or ultrasound transducer (2), is determined for guided elastic waves which have been detected using sensors (7) or ultrasound transducers (2).

7. A method in accordance with one of the preceding claims, **characterized in that** variations in or damage to a rotor blade (1) are recognized by a comparison of changed measured signals with respect to measured signals or simulation models (FEM simulation) of an undamaged rotor blade (1) or of the starting structure of a rotor blade (1).

8. A method in accordance with claim 7, **characterized in that** a localization of the respective damage takes place by guided elastic waves which are emitted by a damage event and which are detected by at least three sensors (7) or ultrasound transducers (2) and the position coordinates of the damage are integrated into the simulation model.

9. A method in accordance with one of the preceding claims, **characterized in that**, after taking into account detected structural damage (6) which had occurred at a rotor blade (1) in the respective finite element model, the stress and/or the remaining load-bearing capacity present at this moment is/are determined.

10. A method in accordance with one of the preceding claims, **characterized in that** local elongations at the rotor blade are determined using ultrasound transducers (2) or other sensors.

11. A method in accordance with one of the preceding claims, **characterized in that** networks are formed by sensors (7), actuators (8) or ultrasound transducers (2) in which the spacings of adjacent sensors (7) or ultrasound transducers (2) are smaller in critical rotor blade regions, exposed to higher stresses than in other regions of the rotor blade (1).

12. A method in accordance with one of the preceding claims, **characterized in that** the events of the model-based methods for local and global monitoring of a condition are combined to one evaluation result.

## Revendications

1. Procédé basé sur un modèle, pour la surveillance de l'état de pales de rotors pour des éoliennes, dans lequel, avec un réseau de capteurs et d'actionneurs montés sur une pale de rotor (1) ou avec une disposition de réseau de transducteurs à ultrasons (2), les vibrations propres de la pale de rotor, qui apparaissent globalement sur la pale de rotor (1) et les ondes élastiques guidées localement sont en permanence détectées avec une résolution temporelle et spatiale ;
en outre, les ondes élastiques guidées périodiquement à des intervalles de temps prédéterminés, qui sont émises par un actionneur (8) ou un transducteur à ultrasons (2), sont détectées par des capteurs (7) ou des transducteurs à ultrasons (2) et sont examinées afin de détecter les variations des ondes émises ;
pour la détermination de la fonction de transmission des actionneurs (8) ou des transducteurs à ultrasons (2), des ondes élastiques guidées d'une forme définie étant émises et une analyse de signature acoustique étant effectuée avec un ou plusieurs capteur(s) (7) ou transducteur(s) à ultrasons (2) ;
un modèle spatial d'état reposant sur des données de mesure et un modèle de méthode à éléments finis établi sur la base de données de constructions étant élaborés et
une comparaison du modèle identifié actuel, reposant sur des données de mesure, avec le modèle, identifié auparavant, établi sur la base de données de construction à l'aide de paramètres de modèles sensibles aux dommages, étant effectuée et
à partir des signaux de mesure pour les vitesses d'oscillations, les accélérations des oscillations et/ou les dilatations locales, le comportement de transmission de la structure de la pale de rotor est modélisée par cycles, et les dommages structurels (6) sont déterminées par une comparaison entre le modèle identifié actuel et le modèle identifié auparavant à l'aide de paramètres de modèles sensibles aux dommages, moyennant quoi, à partir des modèles identifiés, au moyen d'une Operational Modal Analysis (OMA), des paramètres modaux, à savoir des fréquences propres, des formes propres et/ou des amortissements modaux, sont extraits et ces paramètres sont comparés avec les paramètres simulés correspondants.

2. Procédé selon la revendication 1, **caractérisé en ce que** les périodes des ondes élastiques émises par un ou plusieurs actionneur(s) (8) ou transducteur(s) à ultrasons (2) vers un ou plusieurs capteur(s) (7) ou transducteur(s) à ultrasons (2) sont déterminées.

3. Procédé selon l'une des revendications précédentes, **caractérisé en ce qu'**une détection d'ondes élastiques guidées émises est effectuée simultanément avec au moins trois capteurs (7) ou transducteurs à ultrasons (2).

4. Procédé selon l'une des revendications précédentes, **caractérisé en ce que**, lors d'une détection permanente pour la surveillance de l'état, les ondes élastiques émises dans une plage de fréquence prédéterminée suite à des dommages structurels (6) d'une pale de rotor (1), les temps d'arrivée des signaux et/ou les amplitudes sont mesurées.

5. Procédé selon la revendication 4, **caractérisé en ce que** l'énergie sonore et/ou le rapport entre l'amplitude sonore et l'énergie sonore est/sont mesuré(s).

6. Procédé selon l'une des revendications précédentes, **caractérisé en ce que**, pour des ondes élastiques guidées, qui ont été mesurées avec des capteurs (7) ou des transducteurs à ultrasons (2), une répartition des événements sonores détectés est déterminée en fonction de la position respective d'un capteur (7) ou d'un transducteur à ultrasons (2).

7. Procédé selon l'une des revendications précédentes, **caractérisé en ce que** la comparaison des signaux de mesure modifiés avec des signaux de mesure ou des modèles de simulation (FEM-simulation) d'une pale de rotor (1) non endommagée ou de la structure initiale d'une pale de rotor (1), permet de détecter les modifications ou les endommagements d'une pale de rotor (1).

8. Procédé selon la revendication 7, **caractérisé en ce que**, à l'aide des ondes élastiques guidées émises par un événement d'endommagement, qui sont détectées par au moins trois capteurs (7) ou transducteurs à ultrasons (2), une localisation du dommage correspondant a lieu et les coordonnées de position du dommage sont intégrées au modèle de simulation.

9. Procédé selon l'une des revendications précédentes, **caractérisé en ce que**, après la prise en compte d'un dommage structurel (6) survenu sur une pale de rotor (1) dans le modèle à éléments finis correspondant, la sollicitation et/ou la capacité de charge résiduelle existant à ce moment est déterminée.

10. Procédé selon l'une des revendications précédentes, **caractérisé en ce que**, avec des transducteurs à ultrasons (2) ou d'autres capteurs, les dilatations locales de la pale de rotor sont déterminées.

11. Procédé selon l'une des revendications précédentes, **caractérisé en ce que**, avec des capteurs (7), des actionneurs (8) ou des transducteurs à ultrasons (2), des réseaux sont formés dans lesquels, dans des zones de la pale de rotor critiques fortement sollicitées, les distances entre des capteurs (7) ou des transducteurs à ultrasons (2) adjacents sont inférieures à celles dans d'autres zones de la pale de rotor (1).

12. Procédé selon l'une des revendications précédentes, **caractérisé en ce que** les événements des procédés basés sur un modèle pour la surveillance de l'état local et global sont regroupés en un résultat d'analyse.
